# EUROPEAN PATENT APPLICATION

(11) **EP 1 972 547 A1**
(43) Date of publication of application: **24.09.2008**
(21) Application number: 07104630.4
(22) Date of filing: 21.03.2007
(51) Int. Cl.: B64C 9/22

(54) **Wing leading edge device**

(71) Applicant: Asco Industries, 1150 Sint-Pieters-Woluwe (BE)
(72) Inventor: Vormezeele, Alexandre, 2930 Brasschaat (BE); Cnop, Christophe, 1040 Etterbeek (BE); Bloemen, Dietmar, 3390 Tielt-Winge (BE)
(74) Representative: Quintelier, Claude

(57) **Abstract**

A wing leading edge device (5) comprising a moveable body (6) with a leading edge and a trailing edge (15) and a support and actuation mechanism for attaching said moveable body (6) to a structure of a wing (1) and guiding a substantially circular motion of said moveable body (6), around a hinge line (9a), between a retracted position and at least one deployed position. Said support and actuation mechanism (6) comprises at least one guiding device (17) comprising a track (20) and an arm (19) with a roller (18). The track (20) follows a substantially circular arc substantially centred on the hinge line (9a). The roller (18) is arranged to be guided by the track (20) and hold down said moveable aerodynamic surface (6) so as to substantially restrict lift-off of its trailing edge (15) from an outer skin (16) of the wing (1).

## Description

The present invention relates to a wing leading edge device comprising a moveable aerodynamic body and a support and actuation mechanism. In particular, it relates to a wing leading edge device comprising a moveable body with a leading and a trailing edge and a support and actuation mechanism for attaching said moveable body to a structure of a wing and driving a circular motion of said moveable body, around a hinge line, between a retracted position and at least one deployed position.

Wing leading and trailing edge devices with moveable bodies are generally known in the field of airplanes, and particularly transport airplanes, as means to generate the necessary lift at low speeds in order to achieve take-off, climb, approach and landing performances. These devices must be designed such that the targets for runway length for take-off and landing, climb performance and approach speed are met. The choice of configuration must be made for an ideal balance between optimal Cₗₘₐₓ (maximum lift coefficient) and L/D ratio (lift over drag). There are many parameters to consider such as noise and flight attitude. The flight attitude is important for safe approaches and there are limitations in terms of runway clearance with the tail of the aircraft (linked to the landing gear length...). The noise performance requirements are defined by the noise print the airplane generates around the airport during departure and arrival stages. The allowed levels are defined in function of location with respect to a given airport. If for a given thrust the airplane climbs faster it will be further away from the measuring points surrounding the airport area, thus reducing the noise.

In order to meet those requirements several types of moveable wing leading edge devices have been proposed.

One of these devices, generally known as a drooped leading edge flap, or droop nose, is disclosed in International Patent Application WO 2005/108205 A1. In such a droop nose leading edge device 5, as illustrated in Figs. 1-3, a droop nose body 6, placed at the leading edge of a wing 1, is moveable between a retracted position and a deployed position in which the droop nose body 6 is turned nose down. At high angles of attack, this better aligns the leading edge of the deployed droop nose body 6 with the airflow, reducing the acceleration of the airflow around it and thus the leading edge suction peak.

As a result, droop noses have an advantage over conventional slats in terms of drag. Although there is a C_{Lmax} penalty, the use of droop noses results in a higher L/D ratio. This affects the climb rate at a given power resulting in a quicker gain of altitude. Furthermore droop noses reduce the noise induced by the large gap typical of slotted slat designs.

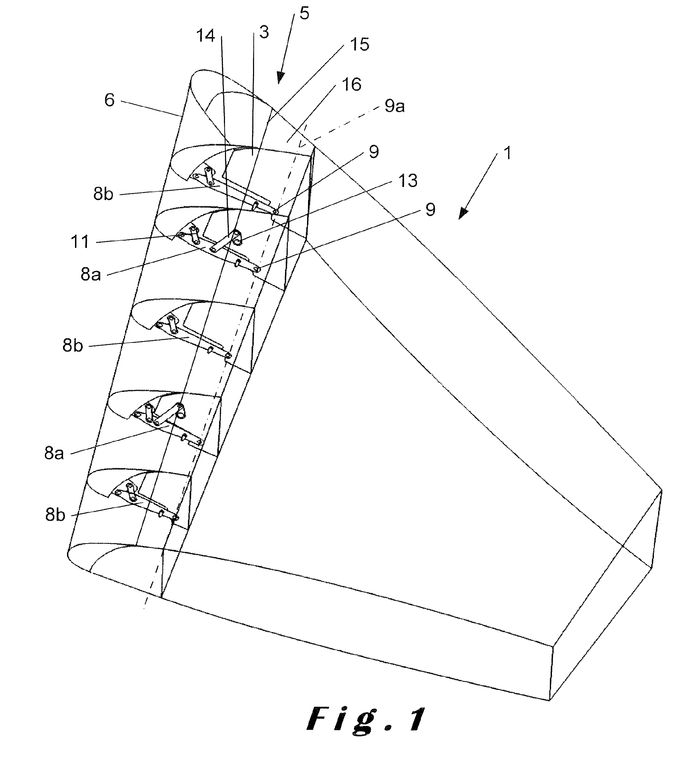

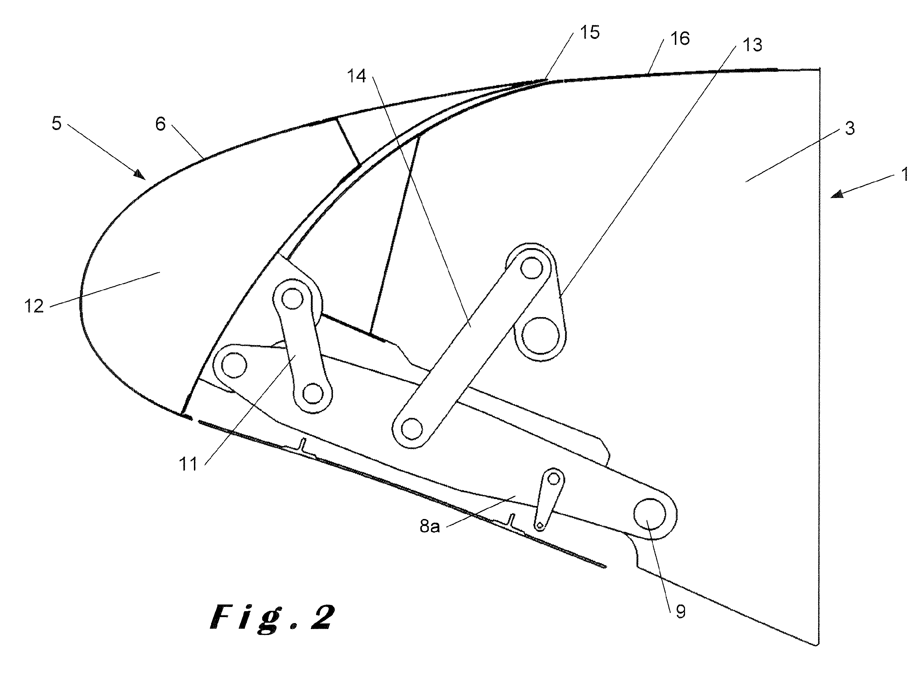

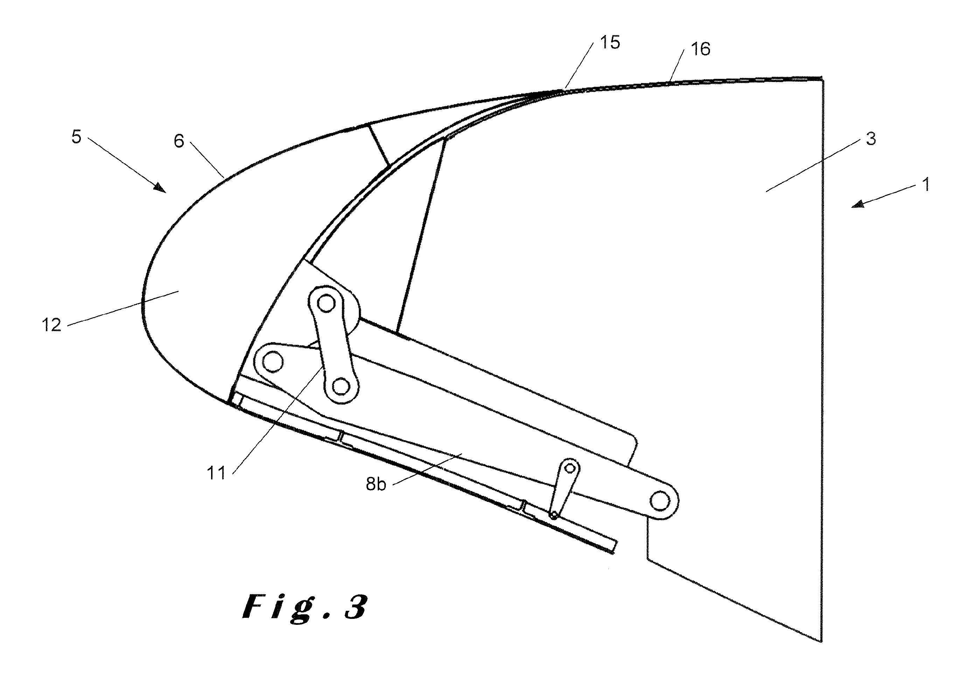

The kinematics of a droop nose leading edge device 5 are such that the trailing edge 15 of the droop nose body 6 should maintain contact with the outer skin 16 of the fixed leading edge of the wing 1 during the deployment. A droop nose body 6 is generally supported by a plurality of support arms 8a,8b, of which some are actuation arms 8a and some are undriven support arms 8b, as illustrated in Fig. 1. The actuation arms 8a and undriven support arms 8b, illustrated respectively in Figs. 2 and 3, have a simple rotational movement around a physical hinge line 9a formed by the hinges 9 in the fixed leading edge. To deploy and retract the droop nose body 6, said droop nose body 6 is driven by a rotary actuator coupled to a lever 13 and link 14 assembly, which drives each actuation arm 8a around a hinge 9.

A drawback of this prior art device is that loss in lift and increase in drag result when the step formed by the thickness of the trailing edge 15 of the droop nose body 6 and the gap between the trailing edge 15 of the droop nose body 6 and the outer skin 16 of the fixed leading edge of the wing 1, exceeds a desired value.

In particular when the droop nose body 6 is deployed, an aerodynamic forward pitching moment is reacted low on the structure of the wing 1 through the attachment linkage 11 to the hinged support arm 8a, 8b. This causes a small elongation of the linkage 11 and deformation of the support arms 8a,8b, as well as of the linking elements between the support arms 8a,8b, the linkage 11 and the droop nose body 6, yielding a few millimetres of trailing edge lift off. This gap can be further increased by deformation of the droop nose 6 itself, as well as the difference in both chord- and spanwise deformations of the wing 1 and the droop nose body 6.

Another prior art moveable wing leading edge device is the sealed slat, as was disclosed in US Patent US 5,544,847. Sealed slats are similar to droop noses, but have different support and actuation mechanisms. The sealed slat body is mounted on support tracks actuated through a rack and pinion mechanism. In general the sealed slat body is designed to have its trailing edge portion in contact with the wing in the retracted setting (cruise) and in an intermediate setting (take-off/climb), while there is a intended gap between the slat body and the fixed wing leading edge in the fully deployed condition of the slat.

Each support track is shaped following a circular arc centred on a virtual hinge point below the wing profile, wherein the virtual hinge points of the tracks supporting a sealed slat body form a hinge line around which the sealed slat body is rotated during deployment and retraction. Due to its hinge line being located below the wing, as opposed to the hinge line of the droop nose body, which is located inside the wing, the sealed slat body has a bigger fowler motion, and the underside of the slat extends away from the wing, thus creating a large gap on the wing underside.

Several types of sealed slats are known:

A first type of sealed slat comprises pitch controlling auxiliary arms. The slat is pivotally connected to the rack/pinion actuated tracks, for example with a single pin connection. To achieve the aerodynamic requirement of slat body trailing edge contact in the intermediate slat setting and gap between the slat body trailing edge and the wing outer skin in the fully deployed slat setting, an auxiliary arm is mounted next to the track and controls the pitch movement of the slat body. The auxiliary arm rolls in an auxiliary track formed by a shaped slot in the wing, wherein this shaped slot follows a curve different from that of the support tracks, thus commanding a relative pitching movement of the sealed slat body with respect to the support tracks.

Another embodiment of the sealed slat, disclosed in US patent 5,544,847, has no auxiliary tracks but achieves the same contact at intermediate setting and gap at fully deployed setting. The slat is mounted fixedly to the circular tracks and has no pitching degree of freedom. The hinge point and fixed wing profile are defined in such a way as to attain aerodynamic requirements.

At the settings where contact between the trailing edge and the wing is required, it is also important to limit the lift off and hold the trailing edge in contact with the wing outer skin in between stations.

Another drawback of existing sealed slat concepts is flutter. In case of a seal applied between the fixed leading edge portion and the slat body, the pressure at the underside of the slat body may cause it to lift off and lose the sealing function. As a consequence the pitching moment on the slat body decreases and its trailing edge falls again, restoring the seal. This turns into a repeating cycle, causing an aerodynamic instability or flutter.

The problem addressed by the present invention is thus that of avoiding lift-off of the trailing edge of the moveable body of a wing leading edge device from the outer skin of the wing. Such lift-off may be caused by aerodynamic forward pitching moments on the moveable body as well as by absolute and relative span- and chordwise deformations of the moveable body and the wing.

This problem is solved by at least one guiding device comprising a track and an arm with means for cooperating with said track, wherein one of the track and the arm is suitable to be fixed to a structural member of the wing, whereas the other one of the track and the arm is fixed to the moveable body, and the arm is arranged to be guided by the track along a circular arc centred on the hinge line and hold down said moveable body so as to substantially restrict lift-off of its trailing edge from an outer skin of the wing in at least one of said positions. Such a device substantially prevents movement of the trailing edge perpendicularly to the outer skin while allowing the deploying and retracting motion of the moveable body.

Advantageously, said other one of the track and the arm of the guiding device is fixed to said moveable body closer to its trailing edge than to its leading edge. This bypasses the deformation of all elements leading to the trailing edge, allowing a better restraint of its lift-off from the wing outer skin. Furthermore, such a position increases the leverage of the guiding device against any aerodynamic forward pitching moment, thus allowing the guiding device to be more lightly dimensioned, resulting in a significant weight saving.

Advantageously, said support and actuation mechanism comprises a plurality of arms, each one of said arms comprising a first extremity, a second extremity, a hinge near said first extremity for pivotally attaching said arm to said wing structure and being attached to said moveable body near said second extremity, and wherein said hinges of said plurality of arms are aligned along said hinge line. The wing leading edge device thus forms a droop nose device with a particularly advantageous L/D ratio that will not be impaired by substantial lift-off of the droop nose body trailing edge and the connected loss in lift, higher drag and noise generation.

Advantageously, at least one of said plurality of arms is integrally formed with at least part of said moveable body, such as a rib. Such an arrangement results in a simple and robust attachment of the moveable body to the support and actuation mechanism.

Advantageously, at least one of said plurality of arms is linked to said moveable body with a single point attachment comprising a single attachment point, preferably with a spherical bearing. Such an arrangement results in a comparatively simple and robust attachment of the moveable body to the support and actuation mechanism with some adjustment to deformation and manufacturing tolerances.

Advantageously, at least one of said plurality of arms is linked to said moveable body with an attachment comprising two eccentrically adjustable pins. Such an attachment remains comparatively simple, while providing the possibility of significant adjustment to compensate for manufacturing tolerances, is also suitable to take up part of any pitching moment acting on the moveable body, reducing the load on the guiding device.

Advantageously, at least one of said plurality of arms is linked to said moveable body with a three-point attachment comprising a linkage, a first attachment point between said arm and said linkage, a second attachment point between said linkage and said moveable body and a third attachment point between said arm and said moveable body. Such an arrangement provides for the transmission of at least part of any pitching moment acting on the moveable body, reducing the load on the guiding device.

Advantageously, said support and actuation mechanism comprises a plurality of support tracks, each support track being attached to said moveable body to support it and guide said substantially circular motion..The wing leading edge device thus forms a sealed slat device wherein the guiding device will prevent slat trailing edge lift-off or flutter. Since in sealed slat support and actuation mechanisms each one of such curved tracks generally requires a cutout in the front spar of the wing to retract partially behind the front spar, whereas the track and arm of the guiding device could be placed before the front spar and thus not require such cutouts, resulting in an improved structural integrity of the wing.

Advantageously, at least one of said support tracks is couplable, preferably through a rack-and-pinion transmission, to an actuator to drive said substantially circular motion of said moveable body. This provides a simple reliable and compact actuation system.

More advantageously, said at least one guidance device and said support tracks may be substantially offset along said hinge line. This allows to increase the distance, spanwise, between the support tracks, as the at least one guidance device will prevent relative deformation and lift-off of the sealed slat body between the support tracks.

Also advantageously, said arm of the guiding device is fixed to said moveable body and said track of the guiding device is arranged to be fixed to said wing structure. Keeping a fixed track and a moveable roller arm allows a more compact arrangement of the guiding device. The present invention also relates to a wing comprising a wing structure, an outer skin and such a wing leading edge device, wherein said track of the guiding device is fixed to said wing structure under said outer skin and said arm of the guiding device traverses said outer skin through a cutout in said outer skin, preferably sealed, for example with a spring loaded door seal or a sliding curtain seal. Mounting the track under the outer skin reduces the drag in the deployed position. Sealing the cutout, for example with a spring loaded door seal or a sliding curtain seal, further decreases the drag while having the additional advantage of preventing the ingress of foreign objects and dust through the cutout.

The present invention also relates to a wing leading edge device comprising a moveable body with a leading and a trailing edge, a support and actuation mechanism, and at least one guiding device, wherein said support and actuation mechanism comprises a plurality of support tracks in substantially parallel planes, each support track being attached to said moveable body to support and guide said moveable body in a motion between a retracted position and at least one deployed position with respect to a wing structure, and said guiding device comprises a track and an arm with means for cooperating with said track, such as a roller, wherein one of the track and the arm is arranged to be fixed to said wing structure, whereas the other one of the track and the arm is fixed to said moveable body, and the arm is arranged to be guided by the track in a plane substantially parallel to the planes of the support tracks.

In such a wing leading edge device, the difference in both chord and spanwise deformation of the wing and the moveable body between the support tracks could lead to local lift-off of the trailing edge. To solve this problem, said guiding device is located substantially offset between the planes of the support tracks, enabling a reduction of the lift-off, as the guiding device will hold down the moveable body between support tracks.

The invention will now be described illustratively, but not restrictively, with reference to the following figures:

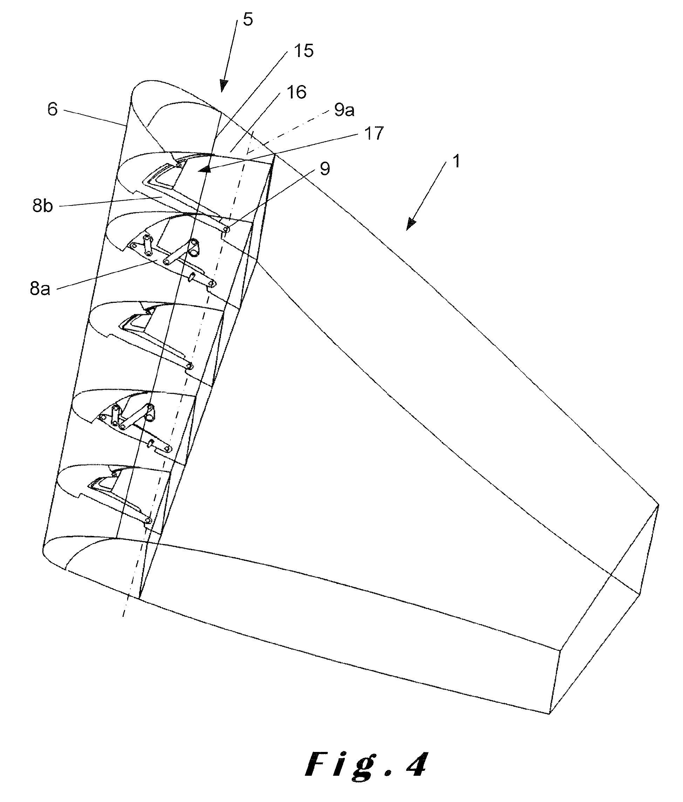

Fig. 4 is a perspective view of a first embodiment of the invention;

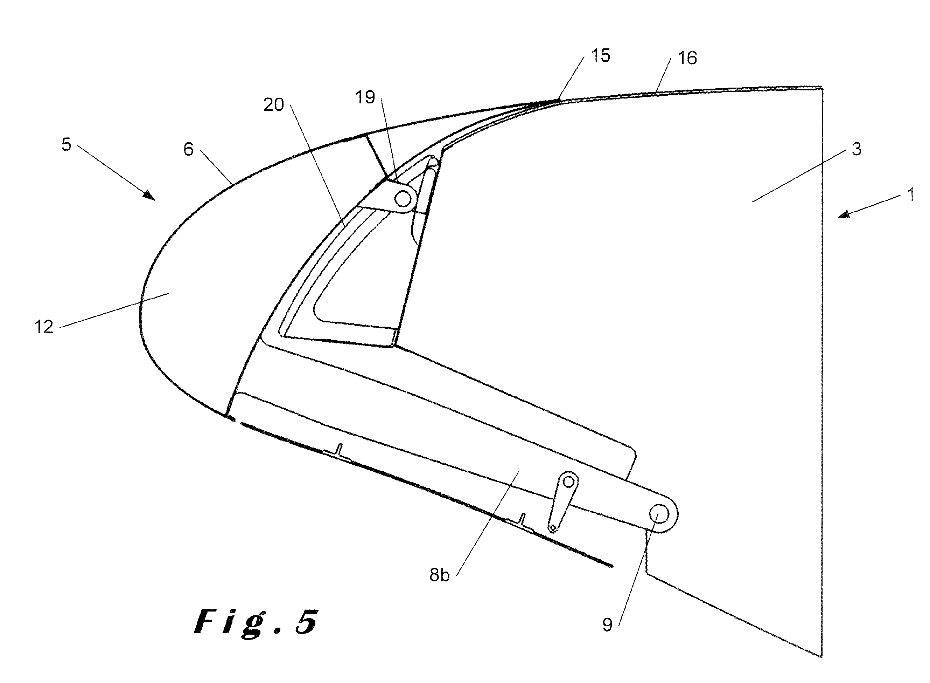

Fig. 5 is a detail view of said first embodiment;

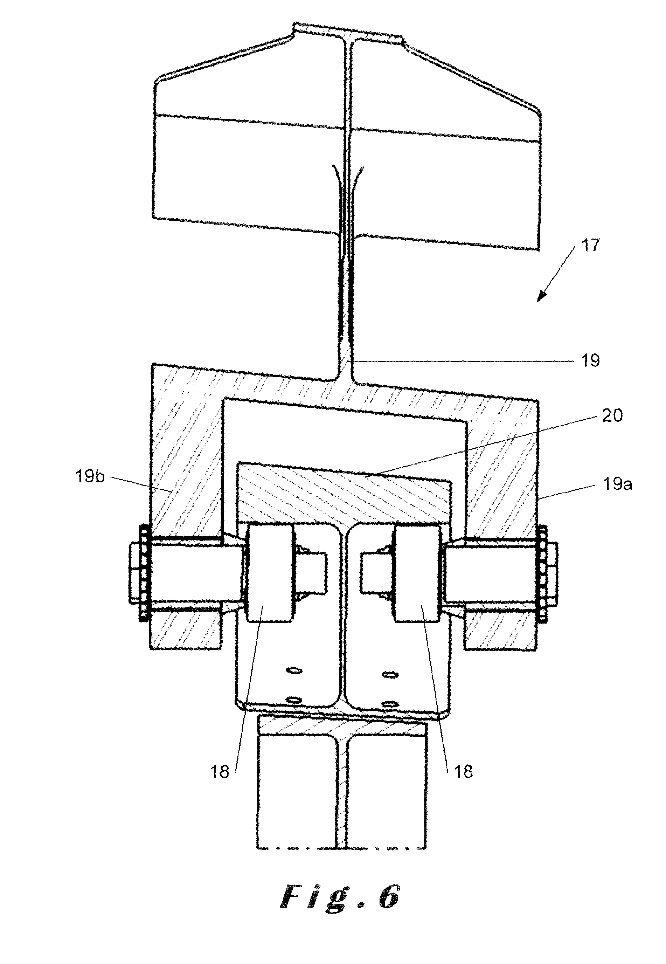

Fig. 6 is a sectional view of the guiding device of this embodiment;

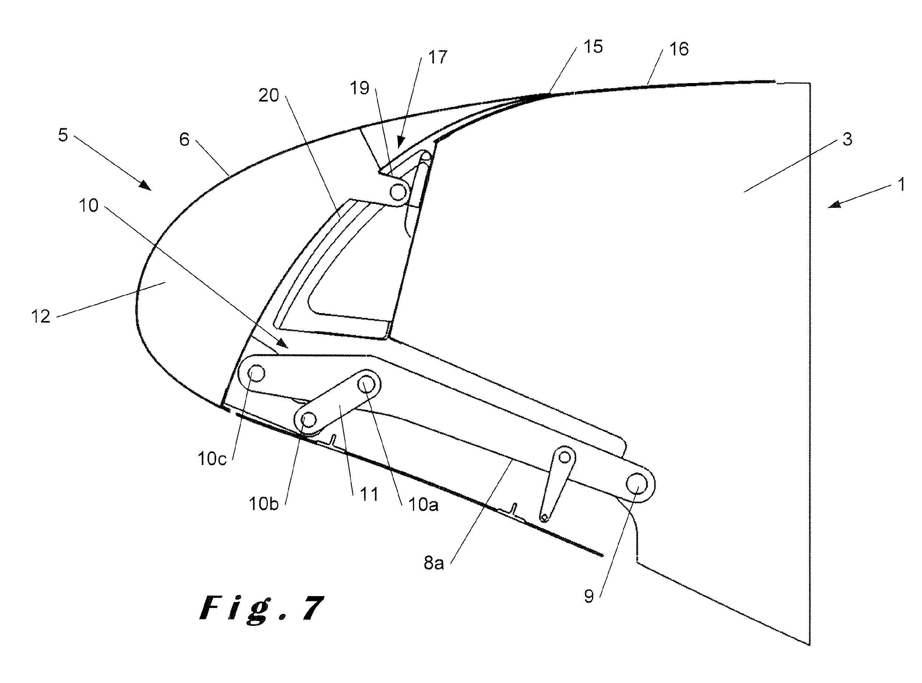

Figs. 7-10 are detail views of other embodiments with different support mechanisms;

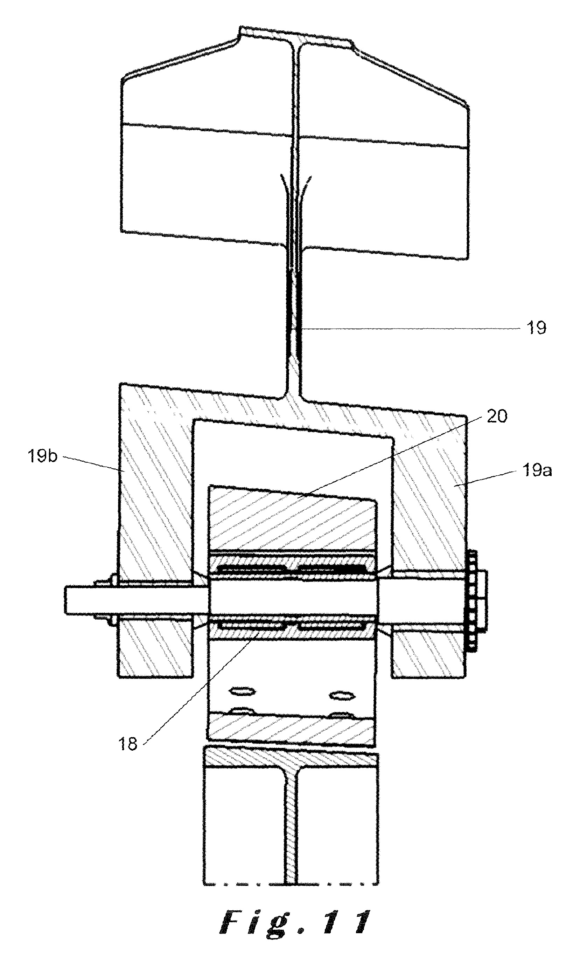

Fig. 11 is a sectional view view of a guiding device of another embodiment;

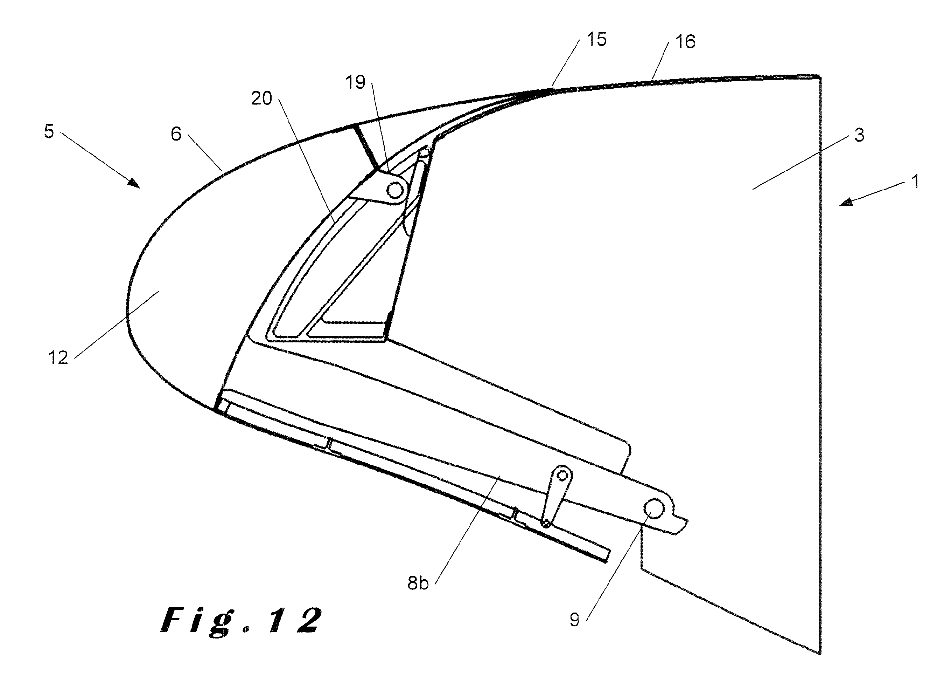

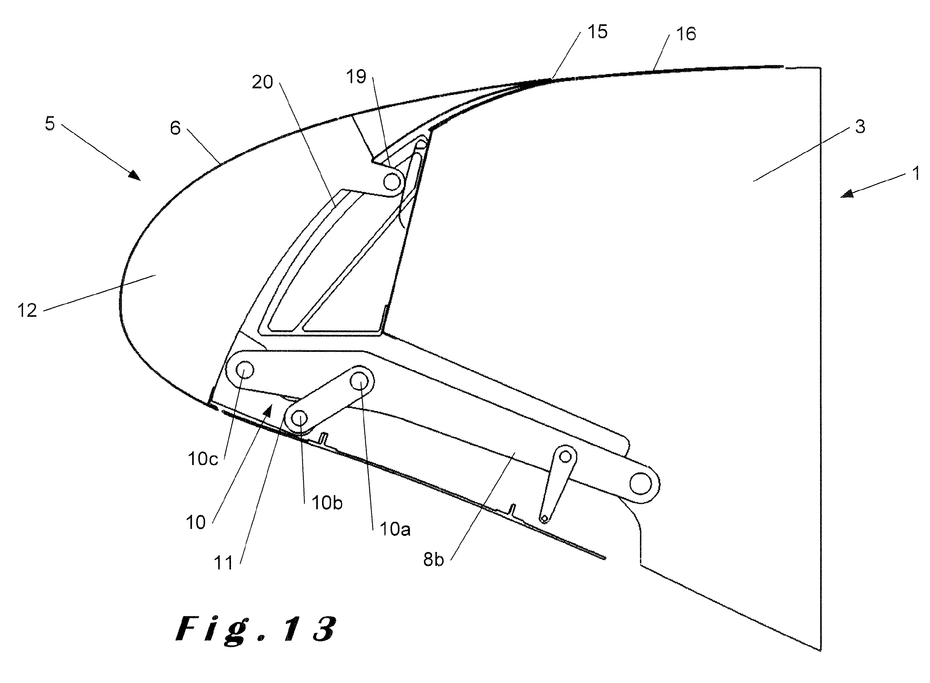

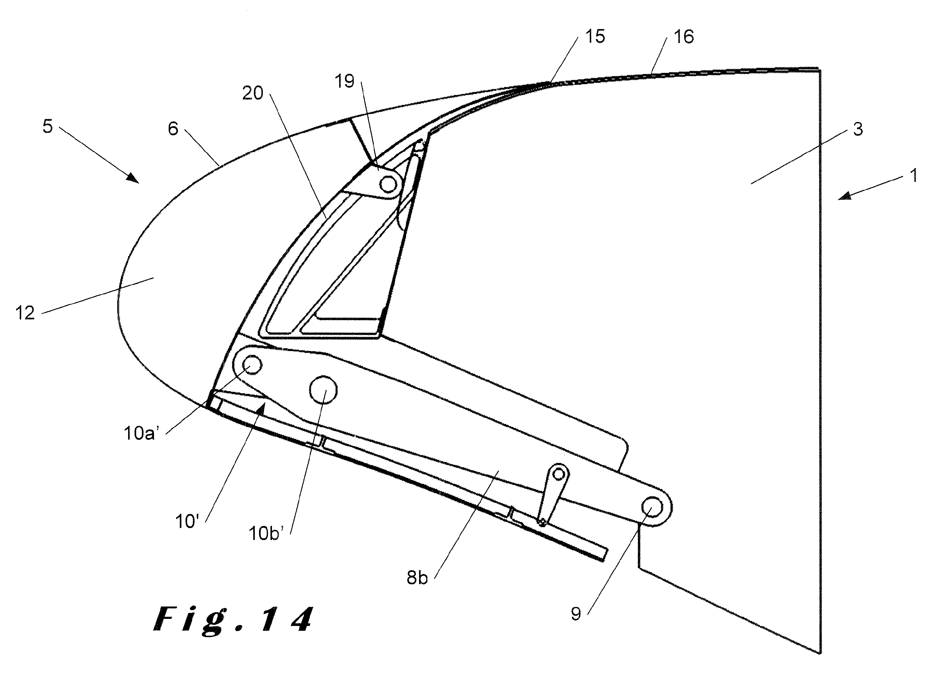

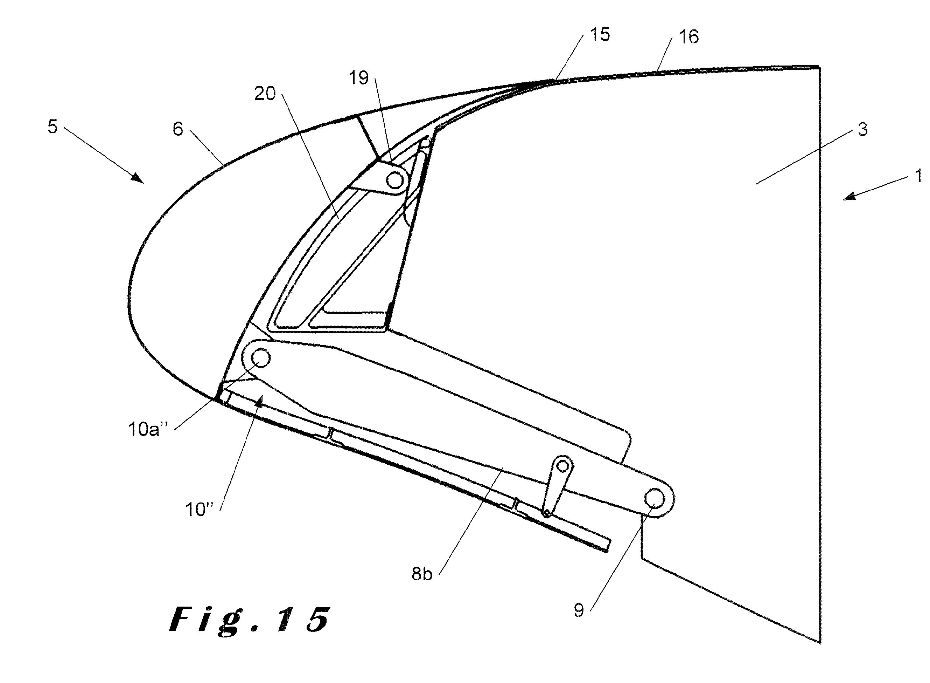

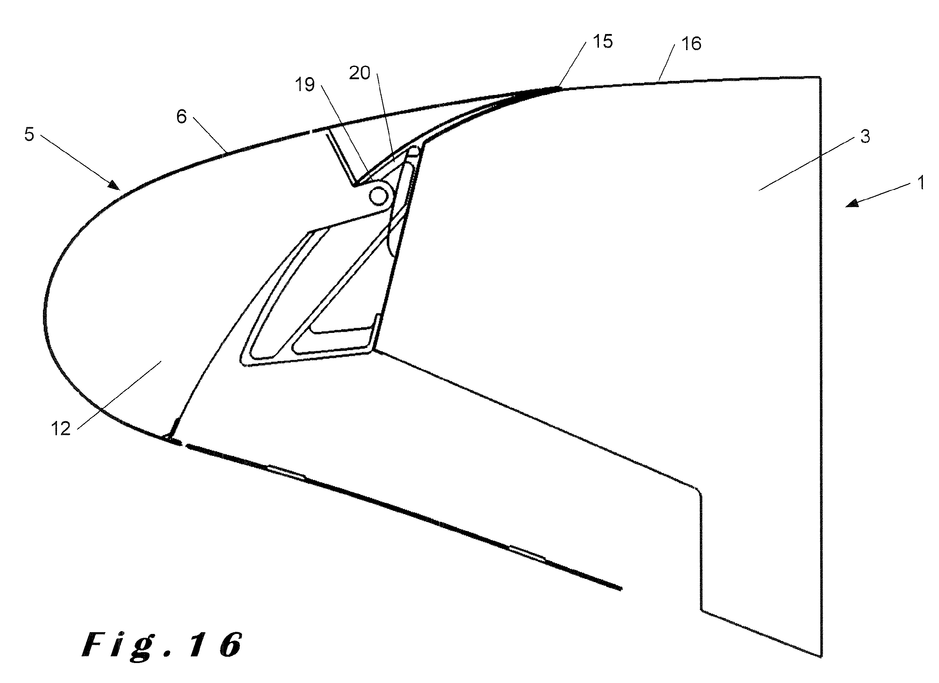

Figs. 12-16 are detail views of other embodiments with various support mechanisms but the same guiding device of Fig. 11;

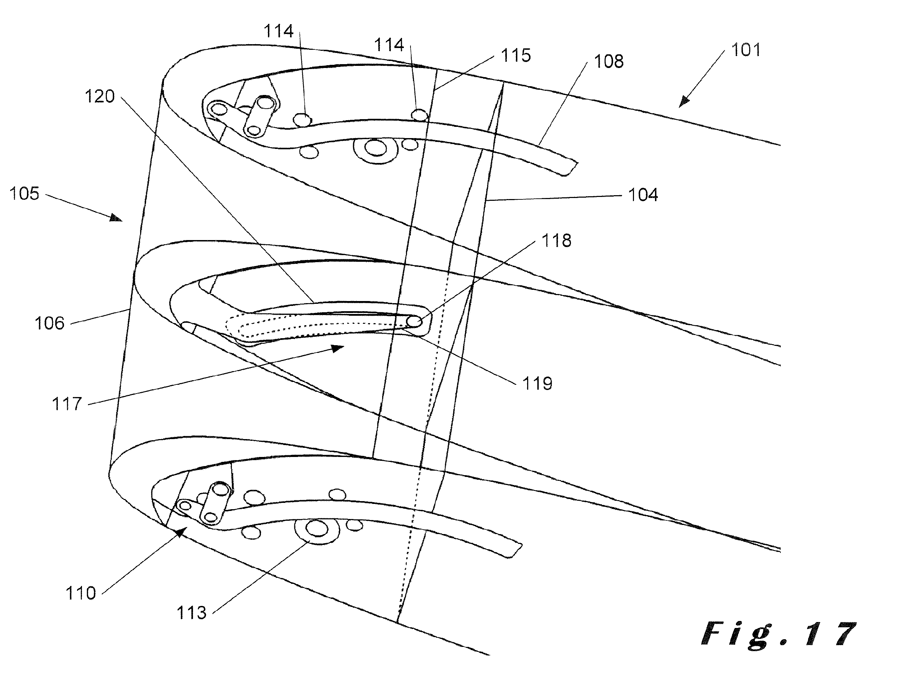

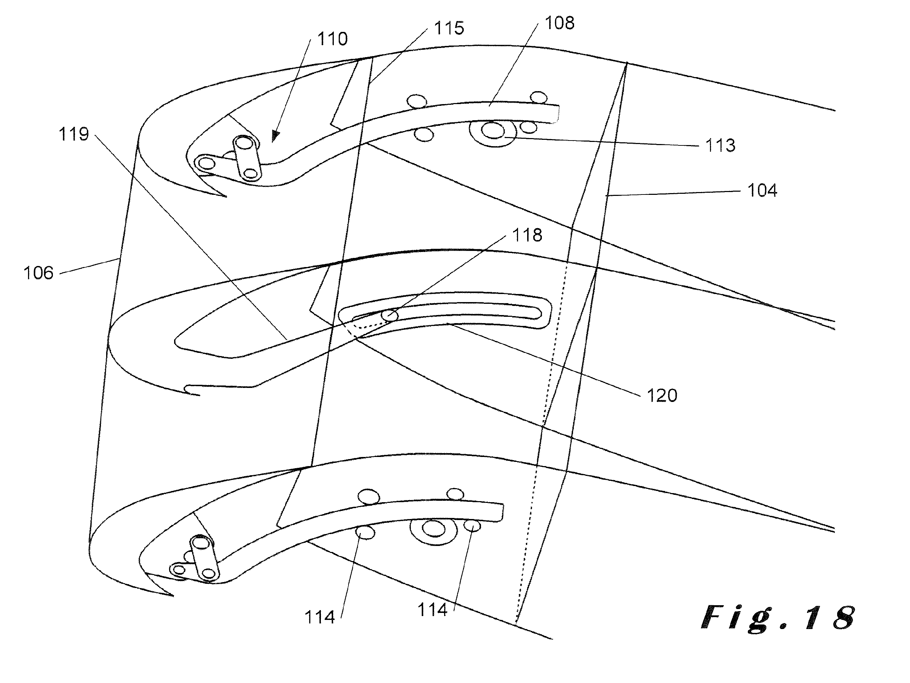

Figs. 17 and 18 are perspective views of another embodiment where the wing leading edge device is a sealed slat device, in retracted and deployed positions;

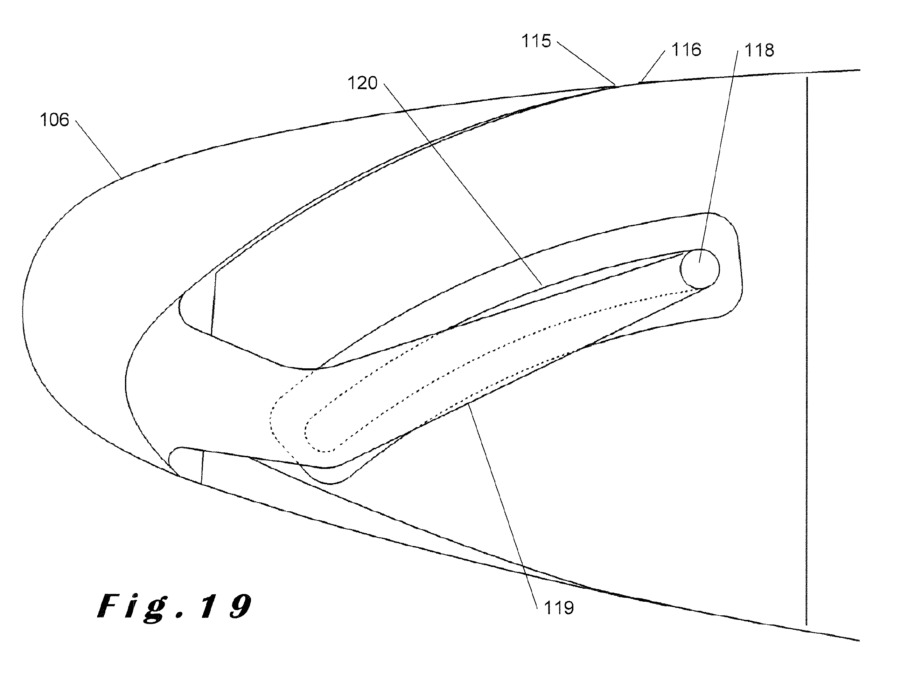

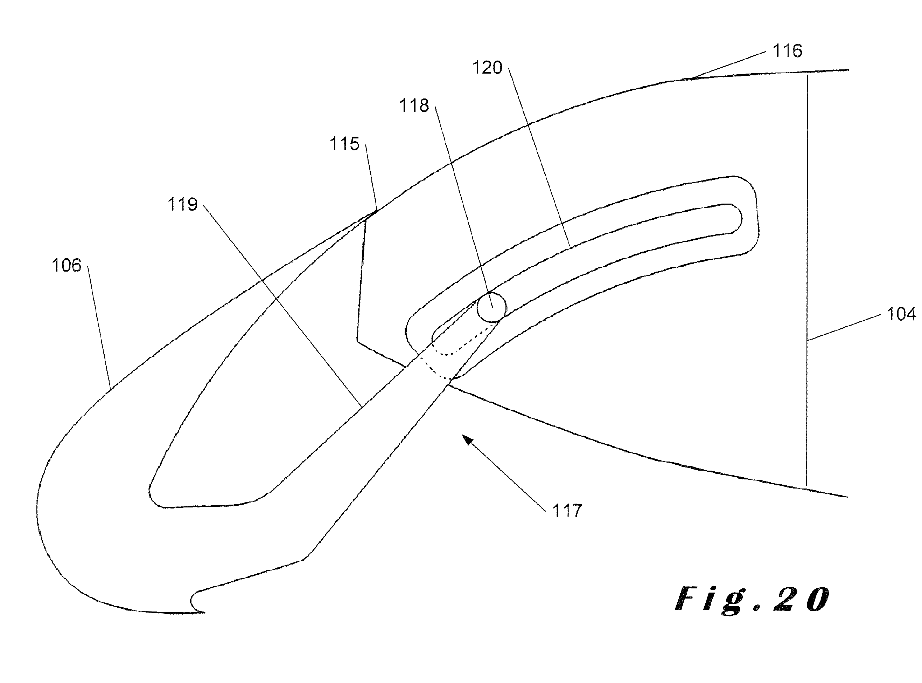

Figs. 19 and 20 are detail views of the guiding device of the same sealed slat device in retracted and deployed positions; and

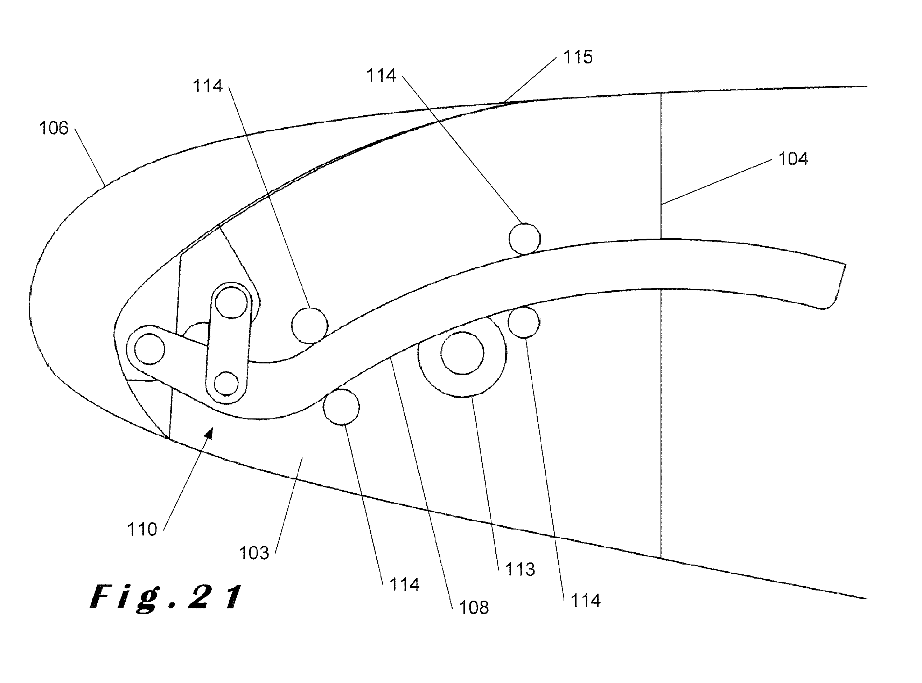

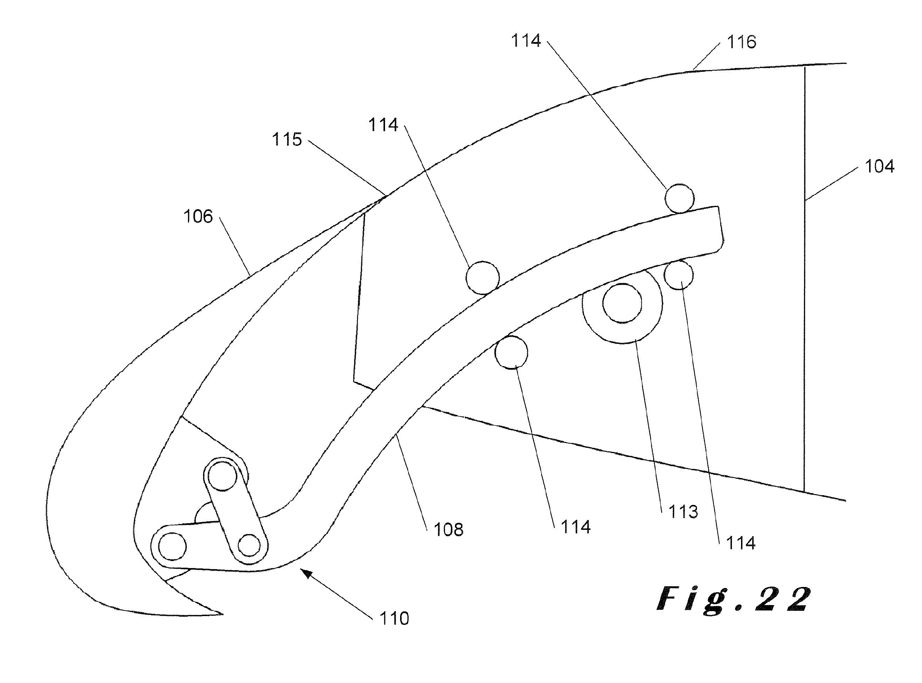

Figs. 21 and 22 are detail views of a support track of the same sealed slat device in retracted and deployed positions.

Fig 4 illustrates a wing 1 with a structure comprising several ribs, each including a rib nose 3 protruding beyond a front spar of the wing 1, and a wing leading edge device 5 according to a first embodiment of the invention. This wing leading edge device 5 is a droop nose comprising a moveable body, in the form of a droop nose body 6, and a support and actuation mechanism comprising a plurality of arms 8a,8b, including actuation arms 8a and undriven support arms 8b. Each one of the arms 8a, 8b is linked to a lower part of a rib nose 3 through a hinge 9 at one end of the arm 8a,8b. At the other end of each arm 8a,8b, a three-point attachment 10 comprising three connection points 10a, 10b and 10c and a linkage 11 connects the arm 8a, 8b to a droop nose rib 12. Each one of the actuation arms 8a is linked to a rotational actuator through a link 13 and a lever 14, so that each actuation arm 8a can be driven by this rotational actuator in a pivoting movement around the hinge 9 to deploy and retract the droop nose body 6.

To prevent lift off of the trailing edge 15 of the droop nose body 6 from the surface of the skin 16 of the wing 1, the droop nose 5 also comprises a set of guiding devices 17, associated in this embodiment to the undriven support arms 8b, and each one comprising a double roller 18 on an arm 19 attached to the droop nose body 6 as close as possible to its trailing edge 15, and a T-track 20, which can be attached to a rib nose 3, as illustrated in Fig. 5, or integrated into it. Fig. 6 shows a section of a guiding device 17, which divides in two branches 19a, 19b to support the double roller 18. Turning back to Fig. 5, the T-track 20 follows a circular arc substantially centred on the hinge 9, so as to guide the double roller 18 along the deployment arc of the wing leading edge device 5 while reacting any aerodynamic forward pitching moment on the droop nose body 6, retaining its trailing edge 15 close to the surface of the outer skin 16 of the wing 1.

As the arm 19 supporting the double roller 18 is mounted near the trailing edge 15 of the droop nose body 6, the outer skin 16 comprises a cutout to let it through. When the droop nose body 6 is deployed, this cutout will be directly exposed to the airflow. To prevent air and foreign objects going through the cutout, it may be sealed, for example with a spring loaded door seal or a sliding curtain seal.

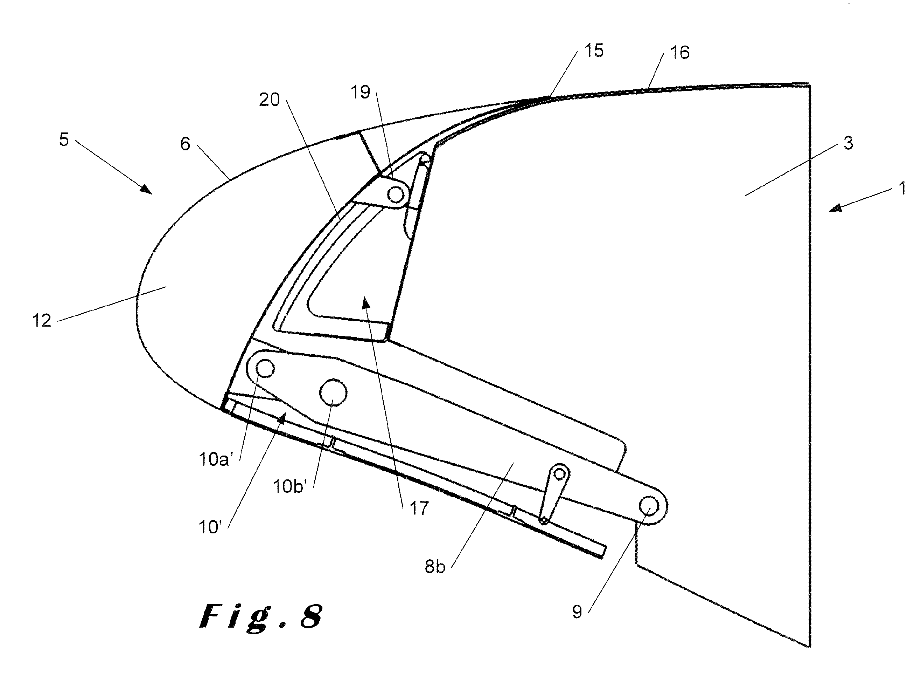

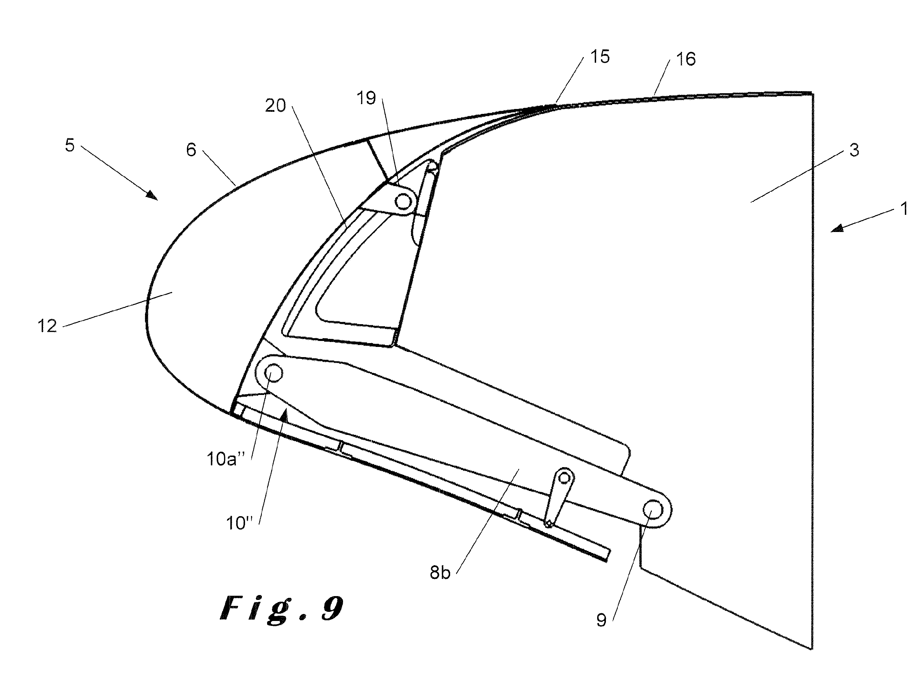

In the embodiment shown in Figs. 4 and 5, each undriven support arm 8b is formed integrally with a droop nose rib 12, whereas the actuation arms 8a are attached to other droop nose ribs 12 through three point attachments 10. As the set of guiding devices 17 would react the aerodynamic forward pitching moments on the droop nose body 6, alternative embodiments are also possible, where these rigid attachments can be replaced on at least some of the arms 8a, 8b by different arrangements. Fig. 7 shows one such alternative embodiment in which an undriven arm 8b is also linked to a droop nose rib 12 through a three point attachment 10 comprising three attachment points 10a, 10b, 10c and a linkage 11. Fig. 8 shows another alternative embodiment in which an undriven arm 8b is linked to a droop nose rib 12 through a simpler attachment 10' comprising two eccentrically adjustable pins 10a', 10b'. Fig. 9 shows another alternative embodiment wherein an undriven arm 8b is linked to a droop nose rib 12 through an even simpler single point attachment 10" comprising a single attachment point 10a", preferably with a spherical bearing 10a".

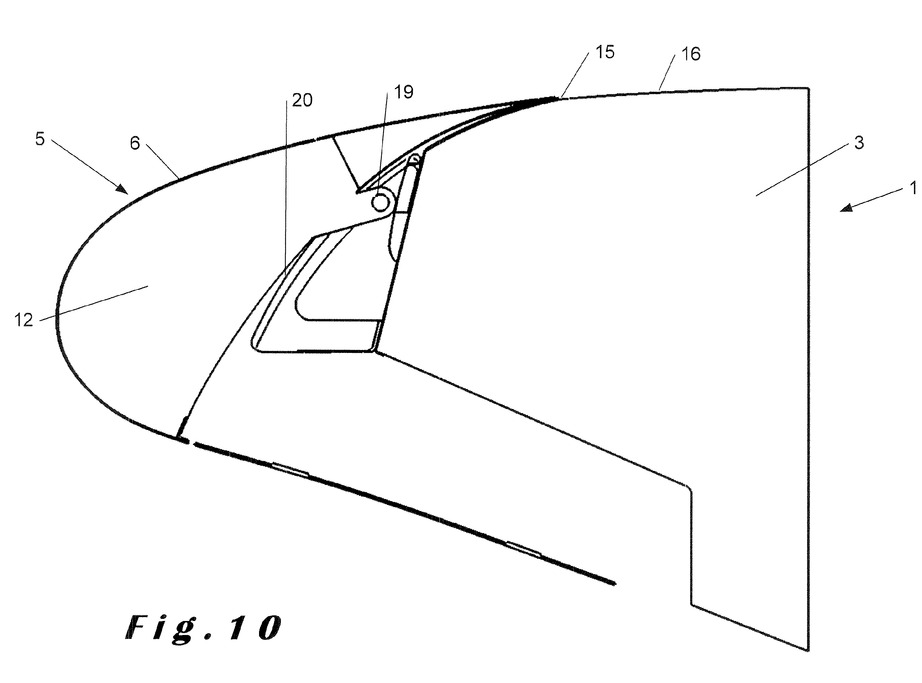

This set of guiding devices 17 could be associated to each one of the arms 8a, 8b, or only to one or some of them. For instance, they could be associated only to some of the undriven arms 8b. Also, as illustrated in Fig. 10, a guidance device 17 does not need to be in substantially the same plane as one of the support arms 8a,8b, and instead can be, as illustrated, attached to a rib nose 3 to which no support arm 8a,8b is attached, as long as the track 20 follows a circular arc centred around the hinge line 9a of the support and actuation mechanism.

In alternative embodiments, illustrated in Figs. 11-16, the guiding device 17 may comprise a single roller instead of the double roller 18 of the previous embodiment. To guide this single roller, the track 20 may be a slot track, as illustrated in Fig. 11, instead of the T-track of the previous embodiments. Like the T-track of Figs. 4-10, it would follow a substantially circular arc substantially centred on the hinge line 9a.

Yet another different embodiment is illustrated in Figs. 17 to 22. The wing leading edge device 105 of this embodiment comprises a moveable body, in the form of a sealed slat body 106, and a support and actuation mechanism comprising a plurality of support tracks 108. Each of said support tracks 108 is formed by an elongated member forming a substantially circular arc, supported by rollers 114 and comprising a rack arranged to engage a pinion 113 coupled to at least one rotational actuator, and attached to the sealed slat body 106 with a three-point attachment 110. The substantially circular arcs of all support tracks 108 are substantially centred on points along a virtual hinge line (not illustrated) below the wing 101. To respectively deploy or retract the sealed slat 106, the support tracks 108 are driven out or in by said pinions 113, so that the sealed slat follows a substantially circular motion around said virtual hinge line. Alternatively, a linear actuator, such as a jackscrew, pivotally attached to both the sealed slat body 106 and to the wing structure, could drive said motion. To accommodate the support tracks 108 in their rearward position when the sealed slat is retracted, cutouts are generally required in the front spar 104 of the wing 101. Such cutouts being structurally undesirable, it is therefore preferred to minimise the number of support tracks 108. Since, however, too large a space between support tracks 108 would eventually allow some lift-off of the sealed slat 106 between tracks 108, a guiding device 117 is installed between support tracks 108 to guide the sealed slat body 106 during its deployment and retraction, while holding it down and preventing lift-off. This guiding device 117 comprises a roller 118 on an arm 119 attached to the sealed slat body 106 and a fixed slot track 120 for guiding said roller 118. The fixed slot track 120 has the same curvature as the tracks 108 and is placed in the fixed leading edge portion of the wing 101 in front of the front spar 104, therefore not requiring an additional cutout. The roller 118 is constrained by the slot track 120 inside the wing 101, during deployment, forcing the sealed slat body 106 to conform to wing deformations. This setup is similar to the auxiliary track of US 5,544,847, however, in the present embodiment, as the fixed slot track 120 follows a substantially circular arc substantially centred on the same virtual hinge line as the support tracks 108, it will not command a relative pitching motion of the sealed slat body 106 with respect to the support tracks 108 but instead prevent lift-off of the trailing edge 115 of the sealed slat body 106 away from the outer skin 116 of the fixed leading edge of the wing 101.

Locating a guiding device substantially offset between the planes of support tracks is however a solution that can also be used in sealed slat devices with retraction and deployment motions other than substantially circular, or in such devices like that disclosed in US 5,544,847 wherein the guiding device also commands a relative pitching motion of the sealed slat body with respect to the support tracks, to allow setting the support tracks further apart, thus saving weight and complication, while preventing a spanwise bending deformation of the sealed slat body relatively to the wing structure. Alternatively, each support track can have a guiding device adjacent to it and another guiding device can be used in addition, substantially offset from said support track and guiding device in order to reduce lift-off by limiting the spanwise length of unsupported body

Although the present invention has been described with reference to specific exemplary embodiments, it will be evident that various modifications and changes may be made to these embodiments without departing from the broader scope of the invention as set forth in the claims. Accordingly, the description and drawings are to be regarded in an illustrative sense rather than a restrictive sense.

## Claims

1. A wing leading edge device (5,105) comprising a moveable body (6,106) with a leading and a trailing edge (15,115) and a support and actuation mechanism for attaching said moveable body (6,106) to a structure of a wing (1,101) and driving a substantially circular motion of said moveable body (6,106), around a hinge line (9a), between a retracted position and at least one deployed position, **characterised in that** said support and actuation mechanism (6,106) comprises at least one guiding device (17,117) comprising a track (20,120) and an arm (19,119) with means (18,118) for cooperating with said track (20,120), such as a roller, wherein one of the track (20,120) and the arm (19,119) is arranged to be fixed to said wing structure, whereas the other one of the track (20,120) and the arm (19,119) is fixed to said moveable body (6,106), and the arm (19,119) is arranged to be guided by the track (20,120) along a substantially circular arc substantially centred on said hinge line (9a) and hold down said moveable body (6, 106) so as to substantially restrict lift-off of its trailing edge (15,115) from an outer skin (16,116) of the wing (1,101) in at least one of said positions.

2. A wing leading edge device (5) according to claim 1, wherein said other one of the track (20) and the arm (19) of the guiding device (17) is fixed to said moveable body (6) closer to its trailing edge (15) than to its leading edge.

3. A wing leading edge device (5) according to claim 2, wherein said support and actuation mechanism comprises a plurality of arms (8a,8b), each one of said arms (8a,8b) comprising a first extremity, a second extremity, a hinge (9) near said first extremity for pivotally attaching said arm (8a,8b) to said wing structure and being attached to said moveable body (6) near said second extremity, and wherein said hinges (9) of said plurality of arms (8a,8b) are substantially aligned along said hinge line (9a).

4. A wing leading edge device (5) according to claim 3, wherein at least one of said plurality of arms (8a, 8b) is integrally formed with at least part of said moveable body (6), such as a rib (12).

5. A wing leading edge device (5) according to claims 3 or 4, wherein at least one of said plurality of arms (8a, 8b) is linked to said moveable body (6) with a single point attachment (10") comprising a single attachment point (10a"), preferably with a spherical bearing.

6. A wing leading edge device (5) according to any one of claims 3 to 5, wherein at least one of said plurality of arms (8a, 8b) is linked to said moveable body (6) with an attachment (10') comprising two eccentrically adjustable pins (10a',10b').

7. A wing leading edge device (5) according to any one of claims 3 to 6, wherein at least one of said plurality of arms (8a, 8b) is linked to said moveable body (6) with a three-point attachment (10) comprising a linkage (11), a first attachment point (10a) between said arm (8a, 8b) and said linkage (11), a second attachment point (10b) between said linkage (11) and said moveable body (6) and a third attachment point (10c) between said arm (8a) and said moveable body (6).

8. A wing leading edge device (105) according to claim 1, wherein said support and actuation mechanism comprises a plurality of support tracks (108), each support track (108) being attached to said moveable body (106) to support it and guide said substantially circular motion.

9. A wing leading edge device (105) according to claim 8, wherein at least one of said support tracks (108) is couplable, preferably through a rack-and-pinion transmission, to an actuator to drive said substantially circular motion of said moveable body (406).

10. A wing leading edge device (105) according to claims 8 or 9, wherein said at least one guidance device (117) and said support tracks (108) are substantially offset along said hinge line.

11. A wing leading edge device (5) according to any one of the previous claims, wherein said arm (19,119) of the guiding device (17,117) is fixed to said moveable body (6,106) and said track (20,120) of the guiding device (17,117) is arranged to be fixed to said wing structure.

12. A wing (1,101) comprising a wing structure, an outer skin and a wing leading edge device according to claim 11, wherein said track (20,120) of the guiding device (17,117) is fixed to said wing structure under said outer skin and said arm (19,119) of the guiding device (17,117) traverses said outer skin through a cutout in said outer skin, preferably sealed, for example with a spring loaded door seal or a sliding curtain seal.

13. A wing leading edge device (105) comprising a moveable body (106) with a leading and a trailing edge (115), a support and actuation mechanism, and at least one guiding device (117), wherein said support and actuation mechanism comprises a plurality of support tracks (108) in substantially parallel planes, each support track (108) being attached to said moveable body (106) to support and guide said moveable body (106) in a motion between a retracted position and at least one deployed position with respect to a wing structure, and said guiding device (117) comprises a track (120) and an arm (119) with means (18,118) for cooperating with said track (120), such as a roller, wherein one of the track (120) and the arm (119) is arranged to be fixed to said wing structure, whereas the other one of the track (120) and the arm (119) is fixed to said moveable body (106), and the arm (119) is arranged to be guided by the track (120) in a plane substantially parallel to the planes of the support tracks (108), said wing leading edge device (105) being **characterized in that** said guiding device (117) is located substantially offset between the planes of the support tracks (118).

14. A guiding device according to claim 13 wherein said arm (119) of the guiding device (117) is fixed to said moveable body (106) and said track (120) of the guiding device (117) is arranged to be fixed to said wing structure.
